# EUROPEAN PATENT APPLICATION

(11) **EP 1 927 794 A1**
(43) Date of publication of application: **04.06.2008**
(21) Application number: 07253735.0
(22) Date of filing: 21.09.2007
(51) Int. Cl.: F16J 9/06, F16J 9/18

(54) **Combined oil ring**

(30) Priority: 29.11.2006 JP 2006321675
(71) Applicant: TEIKOKU PISTON RING CO., LTD., Chiyoda-ku, Tokyo 100-0006 (JP)
(72) Inventor: Katou, Isao, Nagano-ken 394-0047 (JP)
(74) Representative: Davies, Christopher Robert

(57) **Abstract**

A combined oil ring 1 is comprised of an oil ring 2 with a generally I-shaped cross section including upper and lower rails 6, 7 joined by a web 8 for sliding on an inner circumferential surface 10 of a cylinder 9, and a coil expander 3 to press the oil ring 2 radially outwards. The combined oil ring 1 contains a seal member 14 for sealing a gap of the oil ring 2 and capable of making contact with the upper rail 6 in an outer circumferential groove 12 formed by the web 8 and the upper and lower rails 6, 7. The seal member 14 may include a structure where the edge of the seal member 14 is bent, and catches in a window hole 13 formed on the web 8 of the oil ring 2.

## Description

### BACKGROUND OF INVENTION

### 1. Field of Invention

The present invention relates to a combined oil ring utilized in internal combustion engines, and relates in particular to a combined oil ring for lowering consumption of oil passing through a gap section of the oil ring.

### 2. Description of Related Art

A compression ring mainly serving as a gas seal; and an oil control ring mainly for controlling the thickness of the oil film on the wall surface of the cylinder bore, are installed on pistons in internal combustion engines. The oil control rings are mainly a steel combined oil ring with a spacer expander that possesses separate upper and lower rails; and a steel combined oil ring with a coil expander where upper and lower rails have an integrated structure. On both these combined oil rings, the expander presses the rails against the cylinder bore wall, and the rails scrape off oil on the wall surface of the cylinder bore to control the thickness of the oil film on the cylinder wall. On combined oil rings where the upper and lower rails have an integrated structure, the position of the gaps on the upper and lower rails is the same or a near position along the circumference.

One technology disclosed in the patent document 1, provides a seal member in the gap section of the coil expander type combined oil ring where the upper and lower rails have an integrated structure, in which specified grooves are machined respectively at the pair of ends in the gap section of the ring body, and the seal member is inserted into the grooves.

Patent Document 1: Japanese Patent Non-Examined Publication No.8-42692

When the gap positions on the upper and lower rails are the same or near positions along the circumference, then oil mist that passed through the gap of the lower rail and oil on the cylinder wall not scraped off due to the lower rail gap section, tend to pass through the gap of the upper rail and enter the combustion chamber. The combustion chamber tends to reach a negative pressure especially while decelerating during engine braking so that this oil rising phenomenon becomes more drastic when the gaps on the upper and lower rails are aligned.

In the technology of the patent document 1 where grooves are machined into the ring body and a gap seal member is inserted into the grooves, the upper and lower rails and the gap seal member do not make contact and are not sealed. Therefore, under conditions where the oil is sucked upwards, the oil tends to pass through the space between the upper rail and the gap seal member and enter the combustion chamber through the gap of the upper rail. Thus, this technology has little effect on lowering oil consumption. Moreover, manufacturing costs are increased due to the need to machine grooves on the ring.

### SUMMARY OF INVENTION

The present invention has an object of providing a combined oil ring capable of lowering consumption of oil passing through a gap section of the oil ring.

In order to resolve the above mentioned problems, the present invention utilizes the following means. Namely, the combined oil ring of the present invention includes an oil ring with a generally I-shaped cross section comprised of upper and lower rails for sliding on an inner circumferential surface of a cylinder and a web connecting the upper and lower rails and containing window holes for allowing oil to escape, and a coil expander for applying a pressing force radially outwards on the oil ring, wherein a seal member for sealing a gap of the oil ring is installed to allow contact with the upper rail in an outer circumferential groove formed by the web and the upper and lower rails.

The outer circumference of the seal member preferably includes a curvature approximately the same as the curvature of the oil ring outer circumference in order to render a sealing effect.

The width of the seal member along the ring axial direction is preferably set to allow the seal member to move up and down in the outer circumferential groove formed by the web and the upper and lower rails; and also so that the seal member does not seal the window hole formed on the web of the oil ring. The thickness of the seal member along the ring radial direction is set so that the seal member does not protrude farther than the oil ring circumference. Therefore, the seal member width along the ring axial direction for example is one half or less the distance between the upper and lower rails, and the seal member thickness along the ring radial direction is smaller than the depth of the outer circumferential groove formed by the upper and lower rails and the web.

The seal member circumferential length is sufficient if it seals the gap but preferably is longer than the circumferential length of the window hole formed on the web of the oil ring. In order to stably seal the gap, the seal member circumferential length preferably is between one half and the entire circumferential length of the oil ring. The seal member may possess a circumferential length with an overlapping section that is longer than that of the oil ring. In that case, the seal member need not closely contact the oil ring.

The edge of the seal member may be structured to catch in the window hole formed on the web of the oil ring and in this way can apply a rotation preventing effect to the seal member. In that case, the seal member may possess a short circumferential length. Both edges of the seal member may be bent to catch in the window hole, or one edge may be bent so as to catch in the window hole.

The cross section of the seal member is preferably a square, circular, elliptical, or barrel shape in view of the need for good sealing and manufacturing.

In the above described structure of the present invention, the seal member is raised upwards and contacts the upper rail of the oil ring due to inertia force and negative pressure when the piston lowers during engine braking causing a negative pressure in the combustion chamber. The area of the oil passage consequently becomes smaller, which decreases the quantity of oil sucked up into the combustion chamber.

### BRIEF DESCRIPTION OF DRAWINGS

FIG. 1A shows one preferred embodiment of this invention. FIG. 1A is a vertical cross sectional view showing the state where the piston with the combined oil ring is inserted in the cylinder;
FIG. 1B is a cross sectional view showing symbols for indicating the respective dimensions of the combined oil ring;
FIG. 2 is a front view showing a fragment of the combined oil ring;
FIG. 3 is a plan view of the oil ring for showing the circumferential length of the seal member;
FIG. 4 is a vertical cross sectional view of the combined oil ring showing an example of another cross sectional shape of the seal member;
FIG. 5 is a vertical cross sectional view of the combined oil ring showing still another cross sectional shape of the seal member;
FIG. 6 is a plan view of the oil ring for showing another example of a circumferential length of the seal member;
FIG. 7 is a plan view of the oil ring for showing yet another example of a circumferential length of the seal member;
FIG: 8 is a plan view of the oil ring for showing still another example of a circumferential length of the seal member;
FIG. 9 is a front view showing a fragment of the combined oil ring with both bent edges of the seal member caught in the window hole;
FIG. 10 is a front view showing a fragment of the combined oil ring with one bent edge of the seal member caught in the window hole.

### DESCRIPTION OF PREFERRED EMBODIMENTS

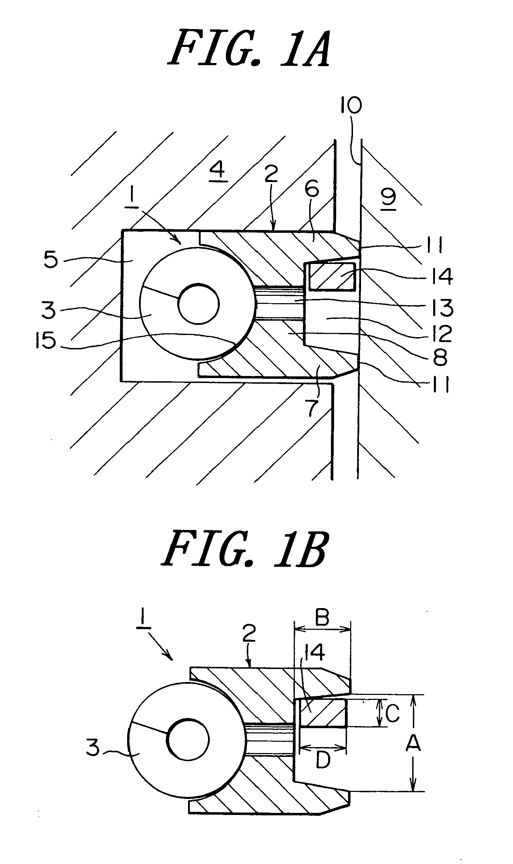

One preferred embodiment of the present invention is described next while referring to FIG. 1 through FIG. 3.

A combined oil ring 1 is comprised of a steel oil ring 2 and a coil expander 3. The combined oil ring 1 is installed in a ring groove 5 of a piston 4.

The oil ring 2 is a ring with a generally I-shaped cross section and has a gap 2a. The oil ring 2 is comprised of upper and lower rails 6, 7 extending circumferentially, and a thin straight web 8 extending circumferentially and connecting the pair of rails 6, 7. The outer circumferential surfaces of the upper and lower rails 6, 7 constitute respectively a sliding surface 11 that makes contact with an inner circumferential surface 10 of a cylinder 9. The outer circumferential protruding sections of the upper and lower rails 6, 7 and the web 8 form an outer circumferential groove 12. The oil scraped off by the lower rail 7 from the inner circumferential surface 10 of the cylinder 9 drops directly to the oil pan. The oil scraped off by the upper rail 6 moves from the outer circumferential groove 12, through multiple window holes 13 formed at intervals along the periphery of the web 8, to the inner circumferential side of the oil ring 2, passes through oil passages not shown in the drawing formed on the piston 4, and drops into the oil pan.

A seal member 14 is installed in the outer circumferential groove 12. The seal member 14 is formed of wire material with a rectangular section, and is installed so as to seal the gap 2a of the oil ring 2. The circumferential length of the seal member 14 is approximately three-fourths the circumferential length of the oil ring 2; and the width C along the ring axial direction is approximately one-third the distance A between the upper and lower rails 6, 7; and the thickness D along the ring radial direction is approximately nine-tenths the depth B of the outer circumferential groove 12.

An inner circumferential groove 15 is formed by the inner circumferential protruding sections of the upper and lower rails 6, 7 and the web 8. The coil expander 3 is installed on this groove 15. The coil expander 3 is made of wire material wound in a coil shape and formed in a ring shape. The coil expander 3 presses the oil ring 2 radially outwards, and presses the outer circumferential sliding surface 11 of the oil ring 2 against the cylinder inner circumferential surface 10.

Therefore, in the combined oil ring 1 structured as described above, the seal member 14 is raised upwards and contacts the upper rail 6 of the oil ring 2 due to inertia force and negative pressure when the piston 4 lowers during engine braking causing the negative pressure in the combustion chamber. The area of the oil passage consequently becomes smaller, which decreases the quantity of oil mist evaporating from the oil film on the wall surface of the cylinder 9 and oil on the wall surface of the cylinder 9 that are sucked up through the gap 2a into the combustion chamber.

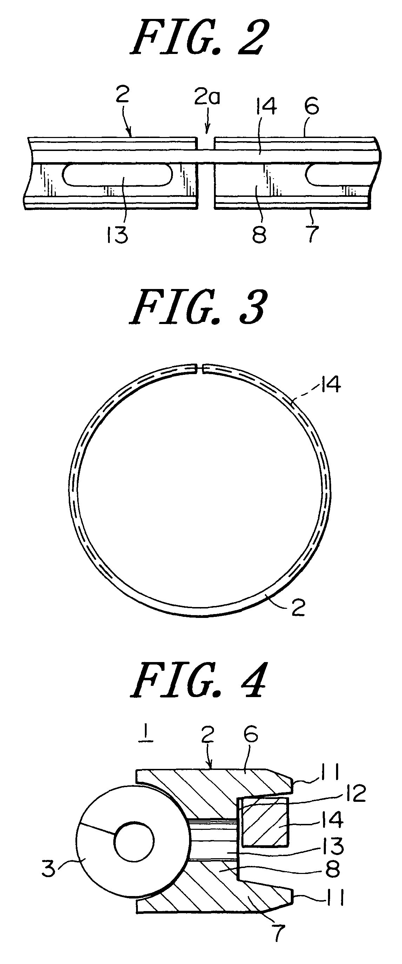

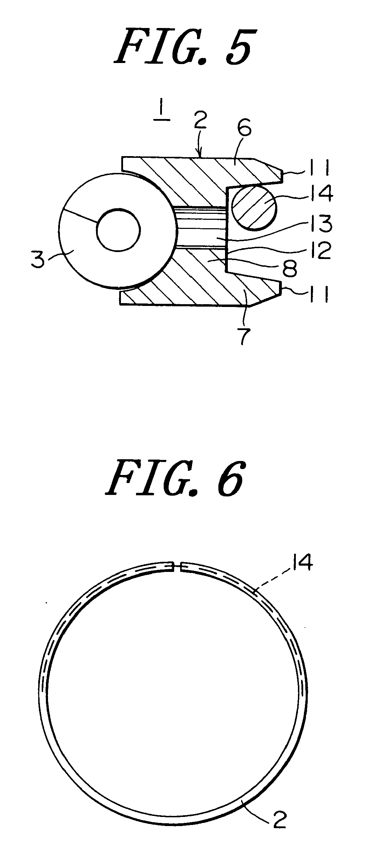

There are no particular restrictions on the cross sectional shape of the seal member 14. Other examples of cross sectional shapes for the seal member 14 are shown in FIG. 4 and FIG. 5. FIG. 4 shows a square cross section and FIG. 5 shows a circular cross section.

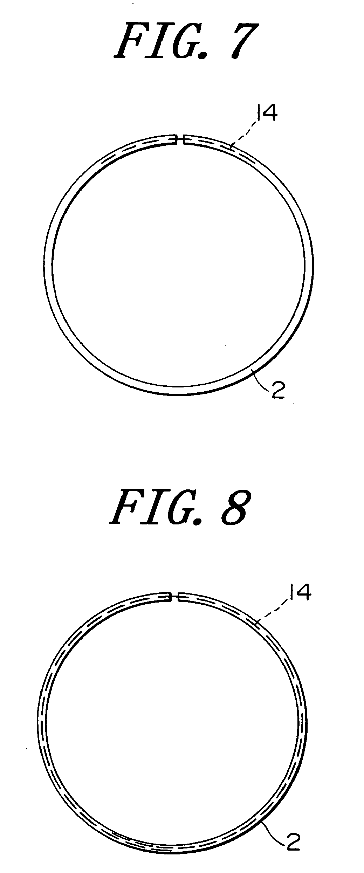

The seal member 14 with a circumferential length capable of sealing the gap 2a is sufficient. However, the circumferential length is preferably longer than the circumferential length of the window hole 13 formed on the web 8 of the oil ring 2. Other examples of circumferential lengths for the seal member 14 are shown in FIG. 6, FIG. 7 and FIG. 8. In FIG. 6, the circumferential length of the seal member 14 is approximately one-half the circumferential length of the oil ring 2. In FIG. 7, the circumferential length of the seal member 14 is approximately one-fifth of the circumferential length of the oil ring 2. In FIG. 8, the seal member 14 possesses a circumferential length with an overlapping section that is longer than that of the oil ring 2.

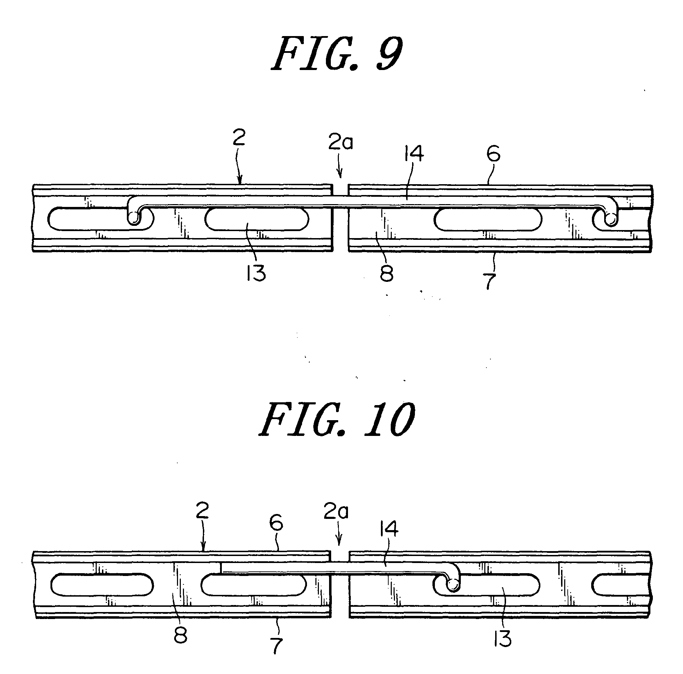

The edge of the seal member 14 is bent to form a structure to catch in the window hole 13 formed on the web 8 of the oil ring 2 and in this way applies a rotation preventing effect to the seal member 14. FIG. 9 and FIG. 10 show examples of the seal member 14. FIG. 9 shows both bent edges of the seal member 14 caught in the window hole 13. FIG. 10 shows one bent edge of the seal member 14 caught in the window hole 13. These structures yield a rotation preventing effect on the seal member 14 so that the seal member 14 may possess a short circumferential length.

The effect when an oil consumption test was made is described next. A gasoline engine with four in-line cylinder of approximately 80 millimeters in diameter was operated in a mode assuming engine braking and the oil consumption quantities were compared. The combined oil ring of this invention containing a seal member yielded an approximately 30 percent improvement in mileage per one liter of oil compared to the conventional combined oil ring. In the seal member utilized in this test, the circumferential length is approximately three-fourths the circumferential length of the oil ring, the width along the ring axial direction is approximately 30 percent of the distance between the upper and lower rails, and the thickness along the ring radial direction is approximately 90 percent of the depth of the outer circumferential groove of the oil ring. Moreover, a bend is formed on the edge, and the bent edge catches in the window hole of the oil ring.

## Claims

1. A combined oil ring comprising an oil ring with a generally I-shaped cross section comprised of upper and lower rails for sliding on an inner circumferential surface of a cylinder and a web connecting the upper and lower rails and containing window holes for allowing oil to escape, and a coil expander for applying a pressing force radially outwards on the oil ring, wherein a seal member for sealing a gap of the oil ring is installed to allow contact with the upper rail in an outer circumferential groove formed by the web and the upper and lower rails.

2. A combined oil ring as claimed in claim 1, wherein the outer circumference of the seal member has a curvature approximately the same as the curvature of the oil ring outer circumference.

3. A combined oil ring as claimed in claim 1 or claim 2, wherein the seal member width along the ring axial direction is one-half or less the distance between the upper and lower rails, and the seal member thickness along the ring radial direction is smaller than the depth of the outer circumferential groove formed by the web and the upper and lower rails.

4. A combined oil ring as claimed in any one of claims 1 to 3, wherein the circumferential length of the seal member is between one half and the entire circumferential length of the oil ring.

5. A combined oil ring as claimed in any one of claims 1 to 4, wherein the edge of the seal member catches in the window hole formed on the web of the oil ring.

6. A combined oil ring as claimed in any one of claims 1 to 5, wherein the cross section of the seal member is a square, circular, elliptical, or barrel shape.
